# EUROPÄISCHE PATENTSCHRIFT

(11) **EP 4 589 397 B1**
(45) Veröffentlichungstag und Bekanntmachung des Hinweises auf die Patenterteilung: **23.09.2026**
(21) Anmeldenummer: 24216188.3
(22) Anmeldetag: 28.11.2024
(51) Int. Cl.: G05B 19/418

(54) **MESSDATENÜBERMITTLUNGSVORRICHTUNG, MESSDATENÜBERMITTLUNGSVERFAHREN UND MESSWERKZEUGSYSTEM**
MEASUREMENT DATA COMMUNICATION DEVICE, MEASUREMENT DATA COMMUNICATION METHOD, AND MEASUREMENT TOOL SYSTEM
DISPOSITIF DE TRANSMISSION DE DONNÉES DE MESURE, PROCÉDÉ DE TRANSMISSION DE DONNÉES DE MESURE ET SYSTÈME D'OUTIL DE MESURE

(30) Priorität: 22.01.2024 DE 102024101716
(43) Veröffentlichungstag der Anmeldung: 23.07.2025
(73) Patentinhaber: Hoffmann Engineering Services GmbH, 81241 München (DE)
(72) Erfinder: BARTH, Wolfram, 80337 München (DE); KÜNSTLER, Marko, 80634 München (DE); LIPPACH, Freddy, 81475 München (DE)
(74) Vertreter: Seemann & Partner Patentanwälte mbB

(56) Entgegenhaltungen:
- EP-A1- 3 413 148
- US-A1- 2016 173 608
- US-A1- 2016 173 962

## Beschreibung

Die Erfindung betrifft eine Messdatenübermittlungsvorrichtung zum Übermitteln von Messdaten mindestens zweier Messwerkzeuge an eine Auswerteeinheit, ein Messdatenübermittlungsverfahren und ein Messwerkzeugsystem.

**In** modernen Werkstätten und Fertigungsstätten sind zur Fertigungs-überwachung und Qualitätssicherung eine Vielzahl von Messwerkzeugen vorgesehen, welche beispielsweise nach jedem Bearbeitungs- oder Herstellungsschritt an einem Werkstück oder an einem Förderband in regelmäßigen Zeitabständen an einem geförderten Artikel eine Messung vornehmen. Darüber hinaus können Messungen manuell ausgelöst werden. Beispielsweise werden Längen, Flächen, Volumina, Temperaturen, Gewicht und andere Eigenschaften von Werkstücken oder Umgebungsparameter bestimmt.

Üblicherweise werden die Messwerte an eine zentrale Auswerteeinheit, beispielsweise einen Steuerungscomputer, übermittelt. Die zentrale Auswerteeinheit ist beispielsweise ausgebildet, die Messwerte zu protokollieren und/oder zu überwachen. Zu Qualitätssicherungszwecken können beispielsweise Eigenschaften hergestellter Produkte permanent gespeichert werden. In einem anderen Anwendungsfall überwacht die Auswerteeinheit Parameter hergestellter Produkte und im Fall von Abweichungen des Parameters, beispielsweise einer gemessenen Länge außerhalb eines vorbestimmten Toleranzbereichs, wird eine Warnung ausgegeben.

Beispielsweise sind die Messwerkzeuge kabelgebunden, beispielsweise via einer USB-Schnittstelle oder via einer seriellen Schnittstelle wie RS232, oder drahtlos mit der zentralen Auswerteeinheit verbunden. Zum Beispiel ist jedes Messwerkzeug als ein Gerät bei der zentralen Auswerteeinheit angemeldet. Für manche Messwerkzeuge ist zur Ansteuerung und/oder zum Abrufen von Messdaten zusätzliche Software auf der zentralen Auswerteeinheit notwendig.

Weiterhin sind Fernauslöser, sogenannte Trigger, zum Auslösen der Aufnahme von Messwerten bekannt. Die Trigger sind mit einer Auswerteeinheit verbunden, wobei die Auswerteeinheit ebenfalls mit mindestens einem Messwerkzeug verbunden ist. Beim Auslösen des Fernauslösers wird ein Signal an die zentrale Auswerteeinheit gesendet, welche daraufhin Messwerte von den Messwerkzeugen anfordert und empfängt. Fernauslöser sind beispielsweise mittels Kabelverbindung mit der Auswerteeinheit verbunden oder sind beispielsweise drahtlos mit der Auswerteeinheit verbunden. Insbesondere im letzteren Fall muss dabei eine zusätzliche Software auf der Auswerteeinheit installiert sein, um die entsprechende Funktionalität zur Verfügung zu stellen.

Im Kontext von Werkstätten und Fertigungsanlagen müssen Auswerteeinheiten, üblicherweise Computer, zahlreiche Kompatibilitätsanforderungen erfüllen, wie beispielsweise Abwärtskompatibilität zu älteren Maschinen und älteren Schnittstellen. Daher kann nicht stets zusätzliche Software auf die Auswerteeinheit aufgespielt werden.

US 2016/0173962 A1 zeigt ein Verfahren zur drahtlosen Übermittlung von Messdaten, die mittels eines Messinstruments aufgenommen worden sind.

US 2016/0173608 A1 zeigt eine Systemarchitektur für drahtlose Metrologieinstrumente. Dabei werden Messdaten von den Metrologieinstrumenten an eine mobile Kommunikationsvorrichtung übermittelt, beispielsweise an ein Smartphone.

EP 3 413 148 A1 zeigt eine numerische Steuerung mit integrierter Nutzerverwaltung. Die Nutzerrechte werden auf mindestens zwei über ein Netzwerk verbundenen Steuerungen verwaltet.

Es ist eine Aufgabe der Erfindung, das Übermitteln von Messdaten von mindestens zwei Messwerkzeugen an eine Auswerteeinheit zu vereinfachen und dabei hohe Kompatibilität der Auswerteeinheit zu ermöglichen.

Gelöst wird diese Aufgabe durch eine Messdatenübermittlungsvorrichtung zum Übermitteln von Messdaten mindestens zweier Messwerkzeuge an eine Auswerteeinheit, wobei die Messdatenübermittlungsvorrichtung eine Kommunikationsvorrichtung aufweist, wobei die Kommunikationsvorrichtung ausgebildet und eingerichtet ist, mit den Messwerkzeugen drahtlos zu kommunizieren und mit der Auswerteeinheit kabelgebunden, insbesondere mittels USB, zu kommunizieren, wobei die Messdatenübermittlungsvorrichtung ausgebildet und eingerichtet ist, mittels der Kommunikationsvorrichtung Messdaten von mindestens einem der Messwerkzeuge zu empfangen und empfangene Messdaten mittels der Kommunikationsvorrichtung seriell an die Auswerteeinheit zu übermitteln, die dadurch weitergebildet ist, dass die Messdatenübermittlungsvorrichtung einen Massenspeicher zur Speicherung von Konfigurationsdateien aufweist, wobei die Messdatenübermittlungsvorrichtung ausgebildet und eingerichtet ist, mindestens eine im Massenspeicher gespeicherte Konfigurationsdatei mit darin gespeicherten Kommunikationseinstellungen auszulesen und zu verarbeiten, wobei die Kommunikationsvorrichtung ausgebildet und eingerichtet ist, gemäß der Kommunikationseinstellungen Messdaten von mindestens einem der Messwerkzeuge zu empfangen und/oder empfangene Messdaten seriell an die Auswerteeinheit zu übermitteln, wobei die Messdatenübermittlungsvorrichtung einen Zwischenspeicher aufweist und die Messdatenübermittlungsvorrichtung ausgebildet und eingerichtet ist, empfangene Messdaten mittels des Zwischenspeichers zwischenzuspeichern.

Die Erfindung basiert auf dem Grundgedanken, dass eine Messdatenübermittlungsvorrichtung zum Anfordern und Empfangen der Messdaten von mindestens zwei Messwerkzeugen sowie zur Übermittlung an eine Auswerteeinheit ausgebildet und eingerichtet ist. Die Messdatenübermittlungsvorrichtung ist ausgebildet und eingerichtet, die empfangenen Messdaten in serieller Abfolge an die Auswerteeinheit zu übermitteln. Dadurch, dass die Messdaten nacheinander übertragen werden, werden Auswerteeinheiten, welche nur einen seriellen Messdateneingang aufweisen, ertüchtigt, gleichzeitig angeforderte Messdaten zu verarbeiten. Mittels Kommunikationseinstellungen in mindestens einer Konfigurationsdatei ist die Messdatenübermittlungsvorrichtung auf einfache Weise konfigurierbar und an Messwerkzeuge und an die Auswerteeinheit anpassbar.

Messdaten seriell an eine Auswerteeinheit zu übermitteln bedeutet im Kontext dieser Offenbarung insbesondere, dass die Messdaten in einer seriellen Datenübertragung übermittelt werden. Hierfür ist beispielsweise eine virtuelle serielle Schnittstelle, zum Beispiel ein virtueller COM-Port, vorgesehen. Insbesondere wird in Ausführungsformen ein serielles Übermitteln als ein Übertragen einzelner Messdaten in serieller Abfolge, also nacheinander, verstanden. Hierzu ist beispielsweise ein Übermitteln von Messdaten gemäß eines human interface device-Protokolls (HID-Protokolls), zum Beispiel in Form von Tastatursignalen, vorgesehen. Insbesondere ist die Auswerteeinheit nicht ausgebildet, gleichzeitig mehrere Messdaten zu empfangen. Auf diese Weise wird eine Kollision von Messwerten vermieden, wenn mehrere Messwerkzeuge gleichzeitig Messdaten über die Messdatenübermittlungsvorrichtung an eine Auswerteeinheit übermitteln.

Es ergibt sich der technische Vorteil, dass bei Verwendung einer erfindungsgemäßen Messdatenübermittlungsvorrichtung gleichzeitig und/oder sequentiell empfangene Messdaten mehrerer Messwerkzeuge an eine Auswerteeinheit übermittelt werden können, wobei nur geringe Anforderungen an die Auswerteeinheit zu stellen sind, was eine hohe Kompatibilität schafft. Eine hohe Kompatibilität wird ebenfalls über eine große Flexibilität erreicht, welche sich aus den flexiblen Einstellungsmöglichkeiten bezüglich der in Konfigurationsdateien gespeicherten Kommunikationseinstellungen ergibt.

Erfindungsgemäß ist die Kommunikationsvorrichtung ausgebildet und eingerichtet, mit der Auswerteeinheit kabelgebunden, insbesondere mittels USB, zu kommunizieren. Insbesondere weist die Messdatenübermittlungsvorrichtung eine USB-Schnittstelle zur Kommunikation mit der Auswerteeinheit auf. Beispielsweise ist eine Messdatenübermittlungsvorrichtung als ein einsteckbares USB-Gerät ausgebildet, zum Beispiel äußerlich ähnlich eines handelsüblichen USB-Sticks.

Die Kommunikationsvorrichtung ist ausgebildet und eingerichtet mit den mindestens zwei Messwerkzeugen drahtlos zu kommunizieren. Beispielsweise ist die Kommunikationsvorrichtung ausgebildet, jeweils eine Kommunikationsverbindung zu einer Mehrzahl von Messwerkzeugen aufzubauen und von der Mehrzahl von Messwerkzeugen Messdaten zu empfangen.

In einer Ausführungsform ist die Messdatenübermittlungsvorrichtung ein mit einer Auswerteeinheit verbundenes virtuelles Messwerkzeug. Gegenüber der Auswerteeinheit gibt die Messdatenübermittlungsvorrichtung die empfangenen Messdaten in kompatibler Form wieder. Vorteilhafterweise ist die Messdatenübermittlungsvorrichtung als anpassbare Schnittstelle zwischen Messwerkzeugen und Auswerteeinheit ausgebildet.

Erfindungsgemäß weist die Messdatenübermittlungsvorrichtung einen Massenspeicher zur Speicherung von Konfigurationsdateien auf. Insbesondere ist eine Konfigurationsdatei eine Textdatei für Kommunikationseinstellungen für das Kommunizieren der Messdatenübermittlungsvorrichtung mit der Auswerteeinheit und/oder eine Textdatei für Kommunikationseinstellungen für das Empfangen von Messdaten von den Messwerkzeugen. Vorzugsweise beinhaltet die mindestens eine Konfigurationsdatei Parameter für den Betrieb der Messdatenübermittlungsvorrichtung. In Abhängigkeit der in der mindestens einen Konfigurationsdatei gespeicherten Kommunikationseinstellungen erfolgt die Kommunikation der Messdatenübermittlungsvorrichtung mit Messwerkzeugen und/oder Auswerteeinheit. Bevorzugterweise ist die Messdatenübermittlungsvorrichtung ausgebildet und eingerichtet, beim Gerätestart die mindestens eine Konfigurationsdatei auszulesen und zu verarbeiten. Insbesondere ist die mindestens eine Konfigurationsdatei, insbesondere mittels der Auswerteeinheit, lesbar und/oder schreibbar. Bevorzugterweise ist die mindestens eine Konfigurationsdatei bearbeitbar. Hierdurch sind je nach Einsatzzweck der Messdatenübermittlungsvorrichtung unterschiedliche Kommunikationseinstellungen konfigurierbar. In einer Ausführungsform ist die Messdatenübermittlungsvorrichtung eingerichtet und ausgebildet, Änderungen in mindestens einer Konfigurationsdatei zu detektieren, wobei insbesondere beim Detektieren einer Änderung die mindestens eine Konfigurationsdatei erneut ausgelesen und verarbeitet wird.

Beispielsweise enthält die Konfigurationsdatei Angaben zu den mindestens zwei Messwerkzeugen, mit denen die Kommunikationsvorrichtung kommuniziert. In einer Ausführungsform sind in mindestens einer Konfigurationsdatei Gerätetyp, Seriennummer, voreingestellte Mess-Vergleichswerte und/oder voreingestellte Messmodi für jedes der Messwerkzeuge vorgesehen. In einer Ausführungsform, in der zur Kommunikation zwischen Messdatenübermittlungsvorrichtung und Auswerteeinheit ein Kommunikationsprotokoll verwendet wird, das mehrere Kommunikationskanäle aufweist, ist vorgesehen, dass in mindestens einer Konfigurationsdatei für jedes der Messwerkzeuge ein Kommunikationskanal, insbesondere eine Kanalnummer, zugeordnet ist.

In einer weiteren Ausführungsform weist eine Konfigurationsdatei Kommunikationsparameter für das serielle Übermitteln von Messdaten an die Auswerteeinheit auf. Beispielsweise ist ein Gerätemodus, ein Kommunikationsprotokoll und/oder die Formatierung von Messdaten, insbesondere Werte- und Zeilenseparatoren, in einer Konfigurationsdatei angegeben.

Die Messdatenübermittlungsvorrichtung weist erfindungsgemäß einen Zwischenspeicher auf und die Messdatenübermittlungsvorrichtung ist ausgebildet und eingerichtet, empfangene Messdaten mittels des Zwischenspeichers zwischenzuspeichern. Dies ermöglicht größere Flexibilität in der Anpassung an die Empfangsmöglichkeiten der Auswerteeinheit. Zudem ist in Ausführungsformen die Messdatenübermittlungsvorrichtung ausgebildet und eingerichtet, die zwischengespeicherten Messdaten zu verarbeiten und die verarbeiteten Messdaten seriell an die Auswerteeinheit zu übermitteln.

Eine komfortable Bedienung wird ermöglicht, wenn die Kommunikationsvorrichtung ausgebildet und eingerichtet ist, den Massenspeicher der Auswerteeinheit als verbundenen Wechseldatenträger zur Verfügung zu stellen. Auf diese Art und Weise ist die mindestens eine auf dem Massenspeicher gespeicherte Konfigurationsdatei einfach zu bearbeiten, sodass schnell Änderungen an den Kommunikationseinstellungen ausführbar sind.

Weitere Funktionalität und Flexibilität erlangt die Messdatenübermittlungsvorrichtung, wenn die Messdatenübermittlungsvorrichtung ausgebildet und eingerichtet ist, mittels der Kommunikationsvorrichtung mindestens eines der Messwerkzeuge gemäß eines vorbestimmten Steuerbefehls anzusteuern, wobei insbesondere der vorbestimmte Steuerbefehl ein Steuerbefehl aus einer Mehrzahl vorbestimmter Steuerbefehle ist und/oder der vorbestimmte Steuerbefehl mittels einer Kommunikationseinstellung in der mindestens einen im Massenspeicher gespeicherten Konfigurationsdatei vorbestimmt ist.

Ein Steuerbefehl ist ein von der Messdatenübermittlungsvorrichtung an mindestens ein Messwerkzeug gesendeter Befehl, welcher im Messwerkzeug mindestens eine Messeinstellung ändert. Eine Messeinstellung ist beispielsweise ein Nullpunkt einer Messung oder eine Messeinheit oder ein Datenformat oder ein Messmodus, wobei ein Messmodus beispielsweise der momentane Wert oder ein Minimal-, Maximal- oder Durchschnittswert ist.

Insbesondere ist der vorbestimmte Steuerbefehl
(a) ein Zurücksetzen auf Null von mindestens einem der Messwerkzeuge und/oder
(b) ein Setzen auf einen vorbestimmten Setzwert von mindestens einem der Messwerkzeuge und/oder
(c) ein Einstellen einer Messeinheit und/oder eines Datenformats und/oder einer Messrichtung mindestens eines der Messwerkzeuge und/oder
(d) ein Einstellen eines Messmodus für mindestens eines der Messwerkzeuge.

Auf diese Weise ist die Messdatenübermittlungsvorrichtung flexibel an die vorgesehene Auswerteeinheit und die eingesetzten Messwerkzeuge anpassbar.

Ein Setzen auf einen vorbestimmten Setzwert gemäß (b) ist auch als "Preset" bekannt. Ein Messwerkzeug wird in einem vorgegebenen Zustand auf einen vorbestimmten Setzwert gesetzt, beispielsweise ein Messschieber beim Messen eines Werkstücks mit bekannter Länge auf diese Länge gesetzt.

Ein Messmodus gemäß (d) ist beispielsweise das Messen eines aktuellen Messwerts, eines Minimalwerts, eines Maximalwerts und/oder einer Messwert-Differenz. Dabei ist vorteilhafterweise, insbesondere bei den drei letztgenannten Messmodi, eine Referenz, insbesondere ein Referenzzeitpunkt, angegeben. Beispielsweise wird von einem Messwerkzeug der Minimalwert der vergangenen 60 Minuten oder die Differenz des aktuellen Messwerts gegenüber einer Länge von 6 mm angefordert.

Weiterhin ist in Ausführungsformen ein Messmodus das Angeben von Messparametern als Messwert, beispielsweise das Zurückgeben des Setzwerts oder eines Messbereichs. Messparameter, welche als Messdaten angefordert werden, sind beispielsweise Voreinstellungen der Messwerkzeuge. Zum Beispiel ist ein Messparameter ein voreingestellter Messwertbereich für eine Länge oder eine Temperatur.

Wird ein Messwerkzeug in einen vorbestimmten Messmodus versetzt, gibt eine zukünftige Messanforderung ohne nähere Spezifikation eines Messmodus einen Messwert gemäß dem vorbestimmten Messmodus zurück.

Insbesondere ist in einer Konfigurationsdatei einstellbar, dass zum Aufbau einer Kommunikationsverbindung zwischen Messdatenübermittlungsvorrichtung und einem Messwerkzeug mindestens ein vorbestimmter Steuerbefehl an das Messwerkzeug übermittelt wird.

In Ausführungsformen ist die Messdatenübermittlungsvorrichtung derart weitergebildet, dass die Kommunikationsvorrichtung ausgebildet und eingerichtet ist, einen vorbestimmten Messbefehl, insbesondere von der Auswerteeinheit, zu empfangen und zu verarbeiten, wobei die Messdatenübermittlungsvorrichtung ausgebildet und eingerichtet ist, in Abhängigkeit des vorbestimmten Messbefehls Messdaten von mindestens einem der Messwerkzeuge anzufordern. Dies ermöglicht ein effizientes Abfragen von Messdaten von den Messwerkzeugen und Übermitteln an die Auswerteeinheit. **In** Erwiderung des Anforderns von Messdaten sind die Messgeräte eingerichtet, Messdaten an die Messdatenübermittlungsvorrichtung zu übermitteln, welche ausgebildet und eingerichtet ist, diese Messdaten zu empfangen.

Der vorbestimmte Messbefehl ist insbesondere von der Auswerteeinheit übermittelt. Ausgelöst wird dies beispielsweise durch eine Nutzerangabe an der Auswerteeinheit oder automatisch. In einer anderen Ausführungsform ist der vorbestimmte Messbefehl von einem mittels der Kommunikationsvorrichtung mit der Messdatenübermittlungsvorrichtung verbundenen Fernauslöser übermittelt. Beispielsweise löst ein Nutzer einen Fernauslöser aus, dieser übermittelt einen vorbestimmten Messbefehl an die Messdatenübermittlungsvorrichtung, welche wiederum in Abhängigkeit des Messbefehls Messdaten von mindestens einem Messwerkzeug anfordert.

Bevorzugterweise ist die Messdatenübermittlungsvorrichtung ausgebildet und eingerichtet, von mindestens einem der Messwerkzeuge gleichzeitig und/oder nacheinander Messdaten gemäß einem Messbefehl anzufordern.

Insbesondere ist vorgesehen, dass der vorbestimmte Messbefehl ein Messbefehl aus einer Mehrzahl von vorbestimmten Messbefehlen ist und/oder eine vorbestimmbare Messsequenz umfasst,
wobei insbesondere die vorbestimmbare Messsequenz
(a) ein gleichzeitiges Anfordern von Messdaten von den Messwerkzeugen ist und/oder
(b) ein gleichzeitiges Anfordern von Messdaten von mindestens einem der Messwerkzeuge ist und/oder
(c) ein gleichzeitiges Anfordern von Messdaten von einer Messwerkzeuggruppe umfassend mindestens eines der Messwerkzeuge ist und/oder
(d) eine Abfolge von Anforderungen von Messdaten von mindestens einem der Messwerkzeuge mit einem, insbesondere mittels des Messbefehls, vorbestimmten Zeitabstand zwischen den Anforderungen ist und/oder
(e) eine Abfolge von Anforderungen von Messdaten von mindestens einer Messwerkzeuggruppe umfassend mindestens eines der Messwerkzeuge mit einem, insbesondere mittels des Messbefehls, vorbestimmten Zeitabstand zwischen den Anforderungen ist.

Ein Anfordern von Messdaten erfolgt bevorzugterweise gemäß einer vorbestimmten Messsequenz. Eine Messsequenz ist eine zeitliche Abfolge von Messanforderungen an mindestens eines der Messwerkzeuge. Eine Messsequenz weist mindestens eine Messanforderung auf. In Ausführungsformen weist eine Messsequenz mehrere Messanforderungen auf, welche alle an ein Messwerkzeug oder jeweils an ein Messwerkzeug oder an mehrere Messwerkzeuge gerichtet sind.

Insbesondere ist jedem vorbestimmten Messbefehl eine vorbestimmte Messsequenz zugeordnet. Ferner ist beispielsweise vorgesehen, dass in mindestens einer Konfigurationsdatei mindestens eine Messsequenz und/oder mindestens ein Steuerbefehl vorbestimmt ist.

Bei einem gleichzeitigen Anfordern von Messdaten von mehreren Messwerkzeugen wie bei Messsequenz gemäß (b) ist es beispielsweise möglich, dass die Messwerkzeuge teilweise gleichzeitig Messdaten an die Messdatenübermittlungsvorrichtung übermitteln. Dieser empfängt diese Messdaten und übermittelt diese seriell an die Auswerteeinheit.

Ein gleichzeitiges Anfordern von Messdaten von mindestens einem Messwerkzeug gemäß (b) ist ferner beispielsweise das gleichzeitige Anfordern mehrerer Messwerte eines Messwerkzeugs wie Minimalwert und Maximalwert eines vorbestimmten Messzeitraums sowie den aktuellen Messwert. In einem anderen Beispiel ist ein gleichzeitiges Anfordern von Messdaten von mindestens einem der Messwerkzeuge ein Anfordern vom aktuellen Messwert sowie eines Durchschnittswerts eines vorbestimmten Messzeitraums von allen Messwerkzeugen.

Ein Abfolge von Anforderungen von Messdaten von einem Messwerkzeug gemäß (d) ist beispielsweise eine Min/Max-Delta-Messung, wobei in einer ersten Anforderung, d.h. einem ersten Anfordern, von einem Messgerät ein Start einer Messung angefordert wird und in einer zweiten Anforderung, d.h. einem zweiten Anfordern, von demselben Messgerät ein Ende der Messung angefordert wird, woraufhin das Messgerät den Minimalwert, den Maximalwert und/oder die Differenz von Minimal- und Maximalwert im zeitlichen Intervall zwischen dem ersten Anfordern und dem zweiten Anfordern übermittelt. Dies ist beispielsweise eine typische Messung zur Überprüfung des Radius einer gefertigten Welle.

Ein vorbestimmter Zeitabstand ist beispielsweise mittels des Messbefehls vorbestimmt. Zum Beispiel ist der Zeitabstand durch den Zeitabstand zwischen mehreren Messbefehlen vorgegeben. In einer anderen Ausführungsform ist für einen vorbestimmten Messbefehl ein vorbestimmter Zeitabstand, insbesondere in einer Konfigurationsdatei, vorgesehen.

Eine zuverlässige Kommunikationsverbindung wird ermöglicht, wenn die Kommunikationsvorrichtung ausgebildet und eingerichtet ist, mit den Messwerkzeugen mittels Bluetooth zu kommunizieren. Bevorzugterweise sind zwei Messwerkzeuge mittels einer Kommunikationsverbindung jeweils ausschließlich mit der Messdatenübermittlungsvorrichtung verbunden.

Flexibel können die Messwerkzeuge angesteuert werden, wenn die Messdatenübermittlungsvorrichtung ausgebildet und eingerichtet ist, die Messwerkzeuge in Messwerkzeuggruppen zu gruppieren. Beispielsweise werden in Abhängigkeit eines vorbestimmten Messbefehls die Messdaten einer vorbestimmten Messwerkzeuggruppe angefordert. Beispielsweise werden nur die Messwerkzeuge, welche eine Temperatur als Messdaten übermitteln, oder die Messwerkzeuge, welche einem vorbestimmten Arbeitsplatz zugeordnet sind, in eine Messwerkzeuggruppe gruppiert und folglich abgefragt. Bevorzugterweise sind die Messwerkzeuggruppen mittels einer Kommunikationseinstellung in der mindestens einen im Massenspeicher gespeicherten Konfigurationsdatei gruppierbar oder gruppiert.

In einer Ausführungsform ist die Messdatenübermittlungsvorrichtung derart weitergebildet, dass die Kommunikationsvorrichtung ausgebildet und eingerichtet ist, in einem ersten Gerätemodus als HID-Gerät oder in einem zweiten Gerätemodus als virtueller COM-Port mit der Auswerteeinheit zu kommunizieren. Hierdurch wird eine hohe Kompatibilität zu unterschiedlichen Auswerteeinheiten hergestellt. Bevorzugterweise ist der Gerätemodus mittels einer Kommunikationseinstellung in der mindestens einen im Massenspeicher gespeicherten Konfigurationsdatei auswählbar oder ausgewählt.

Vorzugsweise ist die Messdatenübermittlungsvorrichtung als USB-Verbundgerät ausgebildet, welches eine Kommunikationskomponente, insbesondere eine communication device class (CDC)-Komponente, und eine Datenträgerkomponente, insbesondere eine USB-Massenspeicher-Komponente, aufweist.

Eine hohe Kompatibilität zwischen Messdatenübermittlungsvorrichtung und Auswerteeinheit wird ermöglicht, wenn die Kommunikationsvorrichtung ausgebildet und eingerichtet ist, empfangene Messdaten mittels mindestens eines der Protokolle USB human interface device (USB-HID), BLE-HID, MUX10, MUX50, EUROMUX und DMX16 an die Auswerteeinheit zu übermitteln. In einer Ausführungsform ist das Protokoll mittels einer Einstellung in der mindestens einen im Massenspeicher gespeicherten Konfigurationsdatei auswählbar oder ausgewählt. Beispielsweise weisen die Kommunikationsprotokolle MUX10, MUX50, EUROMUX und DMX16 mehrere Kommunikationskanäle auf, sodass jedem Messwerkzeug ein Kommunikationskanal zuordbar ist.

Insbesondere ist die Kommunikationsvorrichtung ausgebildet und eingerichtet, mittels eines human interface device (HID) Protokolls mit der Auswerteeinheit zu kommunizieren. Insbesondere ist das HID-Protokoll ein HID-Profil für Bluetooth Low Energy (BLE).

In einer Ausführungsform ist vorgesehen, dass die Kommunikationsvorrichtung ausgebildet und eingerichtet ist, empfangene Messdaten mittels des Hoffmann Group Connected Tools (HCT) Protokolls an die Auswerteeinheit zu übermitteln.

Eine fehlerfreie Auswertung der Messdaten wird ermöglicht, wenn die Messdatenübermittlungsvorrichtung ausgebildet und eingerichtet ist, die Messdaten mit einer eindeutigen Messwerkzeugidentifizierung an die Auswerteeinheit zu übermitteln. Beispielsweise wird in einem wiederkehrenden seriellen Messdaten-Signal mit mehreren aufeinanderfolgenden Messdaten jeweils die gleiche Spaltenzuordnung verwendet. In einer anderen Ausführungsform ist jedem übermittelten Messwert eine eindeutige Messwerkzeugidentifizierung vorangestellt. Eine eindeutige Messwerkzeugidentifizierung ist insbesondere eine Seriennummer des jeweiligen Messwerkzeugs.

In einer Ausführungsform, in der die Kommunikationsvorrichtung als virtueller COM-Port mit der Auswerteeinheit kommuniziert, ist vorgesehen, dass die Messdatenübermittlungsvorrichtung ausgebildet und eingerichtet ist, empfangene Messdaten eines jeweiligen Messwerkzeugs in einem jeweilig vorbestimmten Kanal eines verwendeten Kommunikationsprotokolls zu übermitteln. Beispielsweise ist eine Kanalzuordnung der Messwerkzeuge in einer im Massenspeicher gespeicherten Konfigurationsdatei hinterlegt. Insbesondere ist jedem Messwerkzeug ein Kanal der seriellen Datenübertragung zwischen Messdatenübermittlungsvorrichtung und Auswerteeinheit zugeordnet.

Ferner wird die Aufgabe durch ein Messdatenübermittlungsverfahren zum Übermitteln von Messdaten mindestens zweier Messwerkzeuge mittels einer Messdatenübermittlungsvorrichtung gelöst, wobei die Messdatenübermittlungsvorrichtung eine Kommunikationsvorrichtung zur Kommunikation mit den Messwerkzeugen und mit einer Auswerteeinheit sowie einen Massenspeicher zur Speicherung von Konfigurationsdateien aufweist, wobei im Massenspeicher mindestens eine, insbesondere bearbeitbare, Konfigurationsdatei mit Kommunikationseinstellungen gespeichert ist, wobei das Messdatenübermittlungsverfahren die folgenden aufeinanderfolgenden Schritte umfasst:
- Auslesen der mindestens einen im Massenspeicher gespeicherten Konfigurationsdatei und Verarbeiten der in der mindestens einen Konfigurationsdatei gespeicherten Kommunikationseinstellungen mittels der Messdatenübermittlungsvorrichtung,
- Empfangen von Messdaten von mindestens einem der Messwerkzeuge mittels der Kommunikationsvorrichtung,
- serielles Übermitteln der empfangenen Messdaten an eine Auswerteeinheit mittels der Kommunikationsvorrichtung,
wobei das Empfangen von Messdaten und/oder das serielle Übermitteln gemäß den Kommunikationseinstellungen ausgeführt wird, wobei die Messdatenübermittlungsvorrichtung einen Zwischenspeicher aufweist, wobei die Messdatenübermittlungsvorrichtung empfangene Messdaten mittels des Zwischenspeichers zwischenspeichert.

Das Messdatenübermittlungsverfahren vereinigt die gleichen Vorteile wie die zuvor beschriebene Messdatenübermittlungsvorrichtung auf sich, sodass zur Vermeidung von Wiederholungen auf die obenstehenden Ausführungen verwiesen wird.

Bevorzugterweise ist das Messdatenübermittlungsverfahren derart weitergebildet, dass die Messdatenübermittlungsvorrichtung eine oben beschriebene Messdatenübermittlungsvorrichtung ist. Es wird auf die Ausführungen der oben beschriebenen Vorteile und Eigenschaften verwiesen.

Insbesondere ist das Messdatenübermittlungsverfahren derart weitergebildet, dass zwischen dem Auslesen und dem Empfangen von Messdaten als weitere aufeinanderfolgende Schritte vorgesehen sind:
- Empfangen und Verarbeiten eines vorbestimmten Messbefehls, insbesondere von einer Auswerteeinheit oder von einem mittels der Kommunikationsvorrichtung mit der Messdatenübermittlungsvorrichtung verbundenen Fernauslöser,
- Anfordern von Messdaten von mindestens einem der Messwerkzeuge, insbesondere mindestens zwei der Messwerkzeuge, in Abhängigkeit des vorbestimmten Messbefehls.

Dies ermöglicht einen flexiblen Einsatz des Verfahrens. Ein Fernauslöser ist beispielsweise mittels der Kommunikationsvorrichtung mit der Messdatenübermittlungsvorrichtung verbunden oder verbindbar und ist dazu ausgebildet, mindestens einen vorbestimmten Messbefehl, insbesondere aus einer Mehrzahl vorbestimmter Messbefehle, an die Messdatenübermittlungsvorrichtung zu übermitteln.

In einer weiteren Ausführungsform ist vorgesehen, dass das Messdatenübermittlungsverfahren nach dem Anfordern von Messdaten folgenden weiteren Schritt umfasst:
- Messen der Messdaten mittels des mindestens einen der Messwerkzeuge, insbesondere mittels mindestens zwei der Messwerkzeuge, und Übermitteln der Messdaten an die Messdatenübermittlungsvorrichtung.

Ferner wird die Aufgabe durch ein Messwerkzeugsystem gelöst, umfassend eine voranstehend beschriebene Messdatenübermittlungsvorrichtung und mindestens zwei Messwerkzeuge, wobei die Messwerkzeuge ausgebildet und eingerichtet sind, drahtlos mit der Messdatenübermittlungsvorrichtung zu kommunizieren und Messdaten an die Messdatenübermittlungsvorrichtung zu übermitteln.

Das Messwerkzeugsystem weist die gleichen Vorteile wie die Messdatenübermittlungsvorrichtung und das Messdatenübermittlungsverfahren auf. Auf die obenstehenden Ausführungen wird verwiesen.

In einer Ausführungsform ist vorgesehen, dass das Messwerkzeugsystem eine Auswerteeinheit insbesondere ein Computer Aided Quality (CAQ)-System und/oder ein Manufacturing Execution System (MES)-System, aufweist. Auf diese Weise wird die Effizienz des Messwerkzeugsystems erhöht. In einer Ausführungsform ist eine Auswerteeinheit ein Personal Computer (PC).

Ein CAQ-System ist ein Qualitätsmanagement-Softwaresystem und dient der Erfassung qualitätsbezogener Daten. Hierzu werden beispielsweise statistische Methoden verwendet, um Daten aus Messung, Zuordnung und Sichtprüfung auszuwerten. Ein CAQ-System unterstützt bevorzugterweise die Analyse, Dokumentation und Archivierung qualitätsrelevanter Daten zu Produktionsprozessen und unterstützt insbesondere Planungs- und Implementierungsmaßnahmen zur Qualitätssicherung.

Ein MES-System ist ein Software-System, das den Prozess der Herstellung von Waren vom Rohmaterial bis zum fertigen Produkt überwacht, verfolgt, dokumentiert und steuert. Dabei hat insbesondere ein MES eine direkte Anbindung an die verteilten Systeme der Prozessautomatisierung und ermöglicht Führung, Lenkung, Steuerung oder Kontrolle der Produktion in Echtzeit.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines Messwerkzeugsystems umfassend eine Messdatenübermittlungsvorrichtung gemäß einem ersten Ausführungsbeispiel,
- Fig. 2: eine schematische Ansicht eines Messwerkzeugsystems umfassend eine Messdatenübermittlungsvorrichtung gemäß einem zweiten Ausführungsbeispiel, und
- Fig. 3: ein schematisches Ablaufdiagramm eines Messdaten-übermittlungsverfahrens.

In den Zeichnungen sind jeweils gleiche oder gleichartige Elemente und/oder Teile mit denselben Bezugsziffern versehen, so dass von einer erneuten Vorstellung jeweils abgesehen wird.

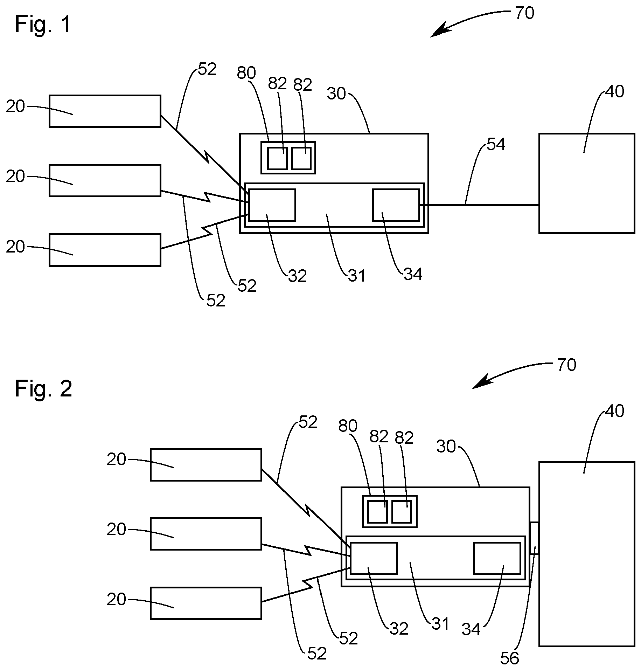

Fig. 1 zeigt eine schematische Ansicht eines Messwerkzeugsystems 70 umfassend eine Messdatenübermittlungsvorrichtung 30 gemäß einem ersten Ausführungsbeispiel. Die Messdatenübermittlungsvorrichtung 30 weist eine Kommunikationsvorrichtung 31 auf, welche eine Input-Kommunikationsvorrichtung 32 und eine Output-Kommunikationsvorrichtung 34 aufweist.

Die Input-Kommunikationsvorrichtung 32 ist ausgebildet und eingerichtet, mittels Bluetooth-Verbindungen 52 mit Messwerkzeugen 20 zu kommunizieren. Die Bluetooth-Verbindungen 52 sind drahtlose Kommunikationsverbindungen, wie es durch das blitz-ähnliche Symbol in den Verbindungslinien in Fig. 1 angezeigt ist.

Die Output-Kommunikationsvorrichtung 34 ist ausgebildet und eingerichtet, mittels einer USB-Verbindung 54 mit einer Auswerteeinheit 40 zu kommunizieren. Hierzu weist die Kommunikationsvorrichtung 31 eine USB-Schnittstelle auf. Die Auswerteeinheit 40 ist in diesem Ausführungsbeispiel ein Personal Computer (PC), auf dem beispielsweise ein CAQ-System als Softwareanwendung läuft. Die Output-Kommunikationsvorrichtung 34 ist als virtueller COM-Port an der Auswerteeinheit 40 angemeldet. Hierzu ist die Messdatenübermittlungsvorrichtung 30 als USB-Gerät der "communication device class" (CDC)-Klasse identifiziert. Die Kommunikation zwischen der Output-Kommunikationsvorrichtung 34 und der Auswerteeinheit 40 erfolgt mittels des Protokolls MUX50.

In diesem Ausführungsbeispiel sind die Messwerkzeuge 20 derart eingerichtet und ausgebildet, dass sie regelmäßig einen jeweiligen aktuellen Messwert mittels der Bluetooth-Verbindungen 52 an die Messdatenübermittlungsvorrichtung 30 senden. Bei den Messwerkzeugen 20 handelt es sich in diesem Ausführungsbeispiel um Längenmesswerkzeuge, welche jeweils unterschiedliche Maße eines durch Fräsen hergestellten Bauteils bestimmen.

Die Messdatenübermittlungsvorrichtung 30 ist eingerichtet und ausgebildet, die von den Messwerkzeugen 20 übermittelten Messdaten zu empfangen. Die Messdatenübermittlungsvorrichtung 30 wiederum übermittelt die Messdaten seriell mittels der USB-Verbindung 54 an die Auswerteeinheit 40. Also werden die Messdaten der Messwerkzeuge 20 nacheinander an die Auswerteeinheit 40 übertragen. Dies gilt auch, wenn mindestens zwei Messwerkzeuge 20 gleichzeitig Messwerte an die Messdatenübermittlungsvorrichtung 30 übermitteln. In diesem Ausführungsbeispiel werden zur eindeutigen Zuordnung mittels der Auswerteeinheit 40 die Messwerte eines jeweiligen Messwerkzeugs 20 in jeweils einem separaten Kanal der MUX50-Verbindung übertragen und/oder mit einer jeweiligen Kanalkennung gekennzeichnet.

Die Messdatenübermittlungsvorrichtung 30 weist einen Massenspeicher 80 auf, in welchem zwei Konfigurationsdateien 82 gespeichert sind. Die Messdatenübermittlungsvorrichtung 30 ist gemäß der in den zwei Konfigurationsdateien 82 gespeicherten Kommunikationseinstellungen konfiguriert. Die Messdatenübermittlungsvorrichtung 30 ist ausgebildet und eingerichtet, die zwei Konfigurationsdateien 82 auszulesen und zu verarbeiten. Dies bedeutet insbesondere, gemäß den Kommunikationseinstellungen mindestens eine Kommunikationsverbindung zu einem Messwerkzeug 20 aufzubauen und/oder bei Verbindungsaufbau mit einem Messwerkzeug 20 einen vorbestimmten Steuerbefehl an das Messwerkzeug 20 zu senden und/oder eine Kommunikationsverbindung zur Auswerteeinheit 40 aufzubauen.

In einer ersten Konfigurationsdatei 82, einer csv-Textdatei, sind Angaben für die zu verbindenden Messwerkzeuge 20 zusammengestellt. Hierzu sind die Namen, Seriennummern und Kanalnummern für die MUX50-Verbindung der Messwerkzeuge 20 in der Konfigurationsdatei 82 gespeichert. Beispielsweise ist für jedes Messwerkzeug 20 eine Zeile der Konfigurationsdatei 82 vorgesehen. Weiterhin ist für jedes Messwerkzeug 20 die Angabe einer Messwerkzeuggruppe vorgesehen, sodass beispielsweise zwei Messwerkzeuge 20 in eine erste Messwerkzeuggruppe und das dritte Messwerkzeug 20 in eine zweite Messwerkzeuggruppe gruppiert sind.

In einer zweiten Konfigurationsdatei 82 sind Parameter der Kommunikationsverbindung zwischen Messdatenübermittlungsvorrichtung 30 und Auswerteeinheit 40 gespeichert. Beispielsweise ist ein Gerätemodus, ein Kommunikationsprotokoll, ein Tastaturlayout und/oder Steuerzeichen vorgesehen. In diesem Ausführungsbeispiel ist der Gerätemodus "CDC" für einen virtuellen COM-Port und das Kommunikationsprotokoll ist MUX50. Als Tastaturlayout ist beispielsweise "Deutsch" eingestellt, wobei dies vor allem bei einer HID-Steuerung mit Tastatureingaben relevant ist. Schließlich sind als Steuerzeichen als Werteseparator ein Komma, als Datensatzseparator ein Zeilenumbruch und als Dezimaltrennzeichen ein Punkt eingestellt.

In Ausführungsformen sind in einer der zwei Konfigurationsdateien 82 oder in einer weiteren Konfigurationsdatei Kommunikationseinstellungen für eine Mehrzahl von Messsequenzen und/oder eine Mehrzahl von Steuerbefehlen vorgesehen. Insbesondere ist in einer Konfigurationsdatei 82 jeweils eine Messsequenz einem Messbefehl zugeordnet.

Bevorzugterweise ist die Messdatenübermittlungsvorrichtung 30 ausgebildet und eingerichtet, bei Start der Messdatenübermittlungsvorrichtung 30 die Konfigurationsdateien 82 aus dem Massenspeicher 80 zu laden, zu verarbeiten, und gemäß der Konfigurationsdateien 82 Kommunikationsverbindungen mit den Messwerkzeugen 20 aufzubauen.

In diesem Ausführungsbeispiel ist die Messdatenübermittlungsvorrichtung 30 ausgebildet und eingerichtet, Änderungen mindestens einer der Konfigurationsdateien zu detektieren. Sobald eine Änderung detektiert wird, werden die Kommunikationseinstellungen erneut ausgelesen und verarbeitet.

In Fig. 2 ist eine schematische Ansicht eines anderen Messwerkzeugsystems 70, umfassend eine Messdatenübermittlungsvorrichtung 30 gemäß einem zweiten Ausführungsbeispiel, dargestellt.

Die Messwerkzeugsysteme 70 aus Fig. 1 und Fig. 2 ähneln sich. Beide weisen jeweils drei Messwerkzeuge 20 auf, welche mittels Bluetooth-Verbindungen 52 drahtlos mit der Kommunikationsvorrichtung 31 der Messdatenübermittlungsvorrichtung 30 verbunden sind.

In diesem Ausführungsbeispiel ist die Kommunikationsverbindung zwischen Messdatenübermittlungsvorrichtung 30 und Auswerteeinheit 40 als USB-HID-Verbindung 56 ausgebildet. Folglich kommuniziert die Output-Kommunikationsvorrichtung 34 in einem Gerätemodus als HID-Gerät mit der Auswerteeinheit 40.

Während in Fig. 1 die Messdatenübermittlungsvorrichtung 30 mittels eines USB-Kabels mit der Auswerteeinheit 40 verbunden ist, ist die Messdatenübermittlungsvorrichtung 30 in Fig. 2 als Einsteckgerät für einen USB-Port der Auswerteeinheit 40 ausgestaltet. Folglich ist in diesem Ausführungsbeispiel die Messdatenübermittlungsvorrichtung 30 mittels einer USB-Schnittstelle, ähnlich eines handelsüblichen USB-Sticks, in die Auswerteeinheit 40 eingesteckt.

Wie im ersten Ausführungsbeispiel weist die in Fig. 2 dargestellte Messdatenübermittlungsvorrichtung 30 einen Massenspeicher 80 auf, wobei auf dem Massenspeicher 80 mindestens eine Konfigurationsdatei 82 mit Parametern bezüglich des Betriebs der Messdatenübermittlungsvorrichtung 30 gespeichert ist. Beispielsweise sind in einer Konfigurationsdatei 82 die drei Messwerkzeuge 20 einschließlich ihrer Seriennummern sowie einem vorbestimmten Messmodus hinterlegt.

Weiterhin sind in einer weiteren Konfigurationsdatei 82 Kommunikationseinstellungen für die HID-Kommunikation zwischen Kommunikationsvorrichtung 31 und Auswerteeinheit 40 vorgesehen. Beispielsweise ist einstellbar, ob Messwerte mit oder ohne Vorzeichen und/oder mit oder ohne Messwerteinheit übermittelt werden. Ferner ist die Anzahl der Vorkommastellen, die Anzahl der Nachkommastellen und/oder ein Dezimaltrennzeichen einstellbar. Schließlich ist in einer Ausführungsform mittels einer Einstellung in einer Konfigurationsdatei 82 eine Einbettung des Messwerts in Zusatzinformationen vorgesehen, beispielsweise mittels Ergänzen einer Seriennummer des Messwerkzeugs, einer laufenden Nummer einer Messwerterfassung und/oder einer Nummer in einer Messwerkzeuggruppe.

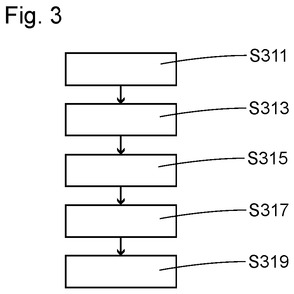

Schließlich ist in Fig. 3 ein Messdatenübermittlungsverfahren zum Übermitteln von Messdaten mindestens zweier Messwerkzeuge 20 mittels einer Messdatenübermittlungsvorrichtung 30 dargestellt. In einem ersten Schritt wird mindestens eine im Massenspeicher 80 gespeicherte Konfigurationsdatei 82 ausgelesen und die in der mindestens einen Konfigurationsdatei 82 gespeicherten Kommunikationseinstellungen mittels der Messdatenübermittlungsvorrichtung 30 verarbeitet (S311). Beispielsweise werden gemäß den Kommunikationseinstellungen die Kommunikationsverbindungen mit den Messwerkzeugen 20 aufgebaut und/oder die Kommunikationsverbindung mit der Auswerteeinheit 40 aufgebaut. In einem anderen Ausführungsbeispiel werden auf Grundlage der Kommunikationseinstellungen Steuerbefehle zum Einstellen von Messparametern an die Messwerkzeuge 20 gesendet.

**In** diesem Ausführungsbeispiel folgt als nächster Schritt ein Empfangen und Verarbeiten eines vorbestimmten Messbefehls von einer Auswerteeinheit 40 (S313). Hier ist der Messbefehl eine Messsequenz, dass von allen verbundenen Messwerkzeugen 20 der jeweilige aktuelle Messwert angefordert werden soll. Anschließend fordert die Messdatenübermittlungsvorrichtung 30 entsprechend des Messbefehls die Messdaten von den Messwerkzeugen 20 an (S315).

Anschließend werden die Messdaten von den Messwerkzeugen 20 gemessen und an die Messdatenübermittlungsvorrichtung 30 übermittelt. Die Kommunikationsvorrichtung 31 empfängt die Messdaten von den Messwerkzeugen 20 (S317).

Abschließend übermittelt die Kommunikationsvorrichtung 31 die empfangenen Messdaten seriell an die Auswerteeinheit 40 (S319), wobei die Übermittlung gemäß den Kommunikationseinstellungen aus den Konfigurationsdateien 82 erfolgt.

**In** einem anderen, nicht dargestellten Messdatenübermittlungsverfahren ist als für den Messbefehl als vorbestimmte Messsequenz für das Anfordern von Messdaten vorgesehen, dass ein Messwerkzeug 20 zunächst aufgefordert wird eine Min-Max-Delta-Messung auszuführen und nach Ablauf eines vorbestimmten Zeitabstands dasselbe Messwerkzeug 20 aufgefordert wird, die Messdaten der Min-Max-Delta-Messung zu übermitteln. Bei einer Min-Max-Delta-Messung werden der minimale Messwert, der maximale Messwert und/oder die Differenz des minimalen und des maximalen Messwerts des Messzeitraums als Messdaten zurückgegeben.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 20: Messwerkzeug
- 30: Messdatenübermittlungsvorrichtung
- 31: Kommunikationsvorrichtung
- 32: Input-Kommunikationsvorrichtung
- 34: Output-Kommunikationsvorrichtung
- 40: Auswerteeinheit
- 52: Bluetooth-Verbindung
- 54: USB-Verbindung
- 56: USB-HID-Verbindung
- 70: Messwerkzeugsystem
- 80: Massenspeicher
- 82: Konfigurationsdatei
- S311: Auslesen der Konfigurationsdatei und Verarbeiten der Kommunikationseinstellungen
- S313: Empfangen und Verarbeiten eines vorbestimmten Messbefehls
- S315: Anfordern von Messdaten
- S317: Empfangen von Messdaten
- S319: serielles Übermitteln der empfangenen Messdaten

## Patentansprüche

1. Messdatenübermittlungsvorrichtung (30) zum Übermitteln von Messdaten mindestens zweier Messwerkzeuge (20) an eine Auswerteeinheit (40), wobei die Messdatenübermittlungsvorrichtung (30) eine Kommunikationsvorrichtung (31) aufweist, wobei die Kommunikationsvorrichtung (31) ausgebildet und eingerichtet ist, mit den Messwerkzeugen (20) drahtlos zu kommunizieren und mit der Auswerteeinheit (40) kabelgebunden, insbesondere mittels USB, zu kommunizieren, wobei die Messdatenübermittlungsvorrichtung (30) ausgebildet und eingerichtet ist, mittels der Kommunikationsvorrichtung (31) Messdaten von mindestens einem der Messwerkzeuge (20) zu empfangen und empfangene Messdaten mittels der Kommunikationsvorrichtung (31) seriell an die Auswerteeinheit (40) zu übermitteln, **dadurch gekennzeichnet, dass**
die Messdatenübermittlungsvorrichtung (30) einen Massenspeicher (80) zur Speicherung von Konfigurationsdateien (82) aufweist, wobei die Messdatenübermittlungsvorrichtung (30) ausgebildet und eingerichtet ist, mindestens eine im Massenspeicher (80) gespeicherte Konfigurationsdatei (82) mit darin gespeicherten Kommunikationseinstellungen auszulesen und zu verarbeiten,
wobei die Kommunikationsvorrichtung (31) ausgebildet und eingerichtet ist, gemäß der Kommunikationseinstellungen Messdaten von mindestens einem der Messwerkzeuge (20) zu empfangen und/oder empfangene Messdaten seriell an die Auswerteeinheit (40) zu übermitteln,
wobei die Messdatenübermittlungsvorrichtung (30) einen Zwischenspeicher aufweist und die Messdatenübermittlungsvorrichtung (30) ausgebildet und eingerichtet ist, empfangene Messdaten mittels des Zwischenspeichers zwischenzuspeichern.

2. Messdatenübermittlungsvorrichtung (30) nach Anspruch 1, **dadurch gekennzeichnet, dass** die Kommunikationsvorrichtung (31) ausgebildet und eingerichtet ist, den Massenspeicher (80) der Auswerteeinheit (40) als verbundenen Wechseldatenträger zur Verfügung zu stellen.

3. Messdatenübermittlungsvorrichtung (30) nach Anspruch 1 oder 2, **dadurch gekennzeichnet, dass** die Messdatenübermittlungsvorrichtung (30) ausgebildet und eingerichtet ist, mittels der Kommunikationsvorrichtung (31) mindestens eines der Messwerkzeuge (20) gemäß eines vorbestimmten Steuerbefehls anzusteuern, wobei insbesondere der vorbestimmte Steuerbefehl ein Steuerbefehl aus einer Mehrzahl vorbestimmter Steuerbefehle ist und/oder der vorbestimmte Steuerbefehl mittels einer Kommunikationseinstellung in der mindestens einen im Massenspeicher (80) gespeicherten Konfigurationsdatei (82) vorbestimmt ist.

4. Messdatenübermittlungsvorrichtung (30) nach Anspruch 3, **dadurch gekennzeichnet, dass** der vorbestimmte Steuerbefehl
(a) ein Zurücksetzen auf Null von mindestens einem der Messwerkzeuge (20) ist und/oder
(b) ein Setzen auf einen vorbestimmten Setzwert von mindestens einem der Messwerkzeuge (20) ist und/oder
(c) ein Einstellen einer Messeinheit und/oder eines Datenformats und/oder einer Messrichtung mindestens eines der Messwerkzeuge (20) ist und/oder
(d) ein Einstellen eines Messmodus für mindestens eines der Messwerkzeuge (20) ist.

5. Messdatenübermittlungsvorrichtung (30) nach einem der Ansprüche 1 bis 4, **dadurch gekennzeichnet, dass** die Kommunikationsvorrichtung (31) ausgebildet und eingerichtet ist, einen vorbestimmten Messbefehl, insbesondere von der Auswerteeinheit (40), zu empfangen und zu verarbeiten, wobei die Messdatenübermittlungsvorrichtung (30) ausgebildet und eingerichtet ist, in Abhängigkeit des vorbestimmten Messbefehls Messdaten von mindestens einem der Messwerkzeuge (20) anzufordern.

6. Messdatenübermittlungsvorrichtung (30) nach Anspruch 5, **dadurch gekennzeichnet, dass** der vorbestimmte Messbefehl ein Messbefehl aus einer Mehrzahl von vorbestimmten Messbefehlen ist und/oder eine vorbestimmbare Messsequenz umfasst,
wobei insbesondere die vorbestimmbare Messsequenz
(a) ein gleichzeitiges Anfordern von Messdaten von den Messwerkzeugen (20) ist und/oder
(b) ein gleichzeitiges Anfordern von Messdaten von mindestens einem der Messwerkzeuge (20) ist und/oder
(c) ein gleichzeitiges Anfordern von Messdaten von einer Messwerkzeuggruppe umfassend mindestens eines der Messwerkzeuge ist und/oder
(d) eine Abfolge von Anforderungen von Messdaten von mindestens einem der Messwerkzeuge (20) mit einem, insbesondere mittels des Messbefehls, vorbestimmten Zeitabstand zwischen den Anforderungen ist und/oder
(e) eine Abfolge von Anforderungen von Messdaten von mindestens einer Messwerkzeuggruppe umfassend mindestens eines der Messwerkzeuge (20) mit einem, insbesondere mittels des Messbefehls, vorbestimmten Zeitabstand zwischen den Anforderungen ist.

7. Messdatenübermittlungsvorrichtung (30) nach einem der Ansprüche 1 bis 6, **dadurch gekennzeichnet, dass** die Kommunikationsvorrichtung (31) ausgebildet und eingerichtet ist, mit den Messwerkzeugen (20) mittels Bluetooth zu kommunizieren.

8. Messdatenübermittlungsvorrichtung (30) nach einem der Ansprüche 1 bis 7, **dadurch gekennzeichnet, dass** der Messdatenübermittlungsvorrichtung (30) ausgebildet und eingerichtet ist, die Messwerkzeuge (20) in Messwerkzeuggruppen zu gruppieren, wobei insbesondere die Messwerkzeuggruppen mittels einer Kommunikationseinstellung in der mindestens einen im Massenspeicher (80) gespeicherten Konfigurationsdatei gruppierbar oder gruppiert sind.

9. Messdatenübermittlungsvorrichtung (30) nach einem der Ansprüche 1 bis 8, **dadurch gekennzeichnet, dass** die Kommunikationsvorrichtung (31) ausgebildet und eingerichtet ist, in einem ersten Gerätemodus als HID-Gerät oder in einem zweiten Gerätemodus als virtueller COM-Port mit der Auswerteeinheit (40) zu kommunizieren, wobei insbesondere der Gerätemodus mittels einer Kommunikationseinstellung in der mindestens einen im Massenspeicher (80) gespeicherten Konfigurationsdatei (82) auswählbar oder ausgewählt ist.

10. Messdatenübermittlungsvorrichtung (30) nach einem der Ansprüche 1 bis 9, **dadurch gekennzeichnet, dass** die Kommunikationsvorrichtung (31) ausgebildet und eingerichtet ist, empfangene Messdaten mittels mindestens eines der Protokolle USB-HID, BLE-HID, MUX10, MUX50, EUROMUX und DMX16 an die Auswerteeinheit (40) zu übermitteln, wobei insbesondere das Protokoll mittels einer Kommunikationseinstellung in der mindestens einen im Massenspeicher (80) gespeicherten Konfigurationsdatei (82) auswählbar oder ausgewählt ist.

11. Messdatenübermittlungsvorrichtung (30) nach einem der Ansprüche 1 bis 10, **dadurch gekennzeichnet, dass** der Messdatenübermittlungsvorrichtung (30) ausgebildet und eingerichtet ist, die Messdaten jeweils mit einer eindeutigen Messwerkzeugidentifizierung an die Auswerteeinheit (40) zu übermitteln.

12. Messdatenübermittlungsverfahren zum Übermitteln von Messdaten mindestens zweier Messwerkzeuge (20) mittels einer Messdatenübermittlungsvorrichtung (30), wobei die Messdatenübermittlungsvorrichtung (30) eine Kommunikationsvorrichtung (31) zur Kommunikation mit den Messwerkzeugen (20) und mit einer Auswerteeinheit (40) sowie einen Massenspeicher (80) zur Speicherung von Konfigurationsdateien (82) aufweist, wobei im Massenspeicher (80) mindestens eine, insbesondere bearbeitbare, Konfigurationsdatei (82) mit Kommunikationseinstellungen gespeichert ist, wobei das Messdatenübermittlungsverfahren die folgenden aufeinanderfolgenden Schritte umfasst:
- Auslesen der mindestens einen im Massenspeicher (80) gespeicherten Konfigurationsdatei (82) und Verarbeiten der in der mindestens einen Konfigurationsdatei (82) gespeicherten Kommunikationseinstellungen mittels der Messdatenübermittlungsvorrichtung (30),
- Empfangen von Messdaten von mindestens einem der Messwerkzeuge (20) mittels der Kommunikationsvorrichtung (31),
- serielles Übermitteln der empfangenen Messdaten an eine Auswerteeinheit (40) mittels der Kommunikationsvorrichtung (31),
wobei das Empfangen von Messdaten und/oder das serielle Übermitteln gemäß den Kommunikationseinstellungen ausgeführt wird,
wobei die Messdatenübermittlungsvorrichtung (30) einen Zwischenspeicher aufweist, wobei die Messdatenübermittlungsvorrichtung (30) empfangene Messdaten mittels des Zwischenspeichers zwischenspeichert.

13. Messdatenübermittlungsverfahren nach Anspruch 12, **dadurch gekennzeichnet, dass** die Messdatenübermittlungsvorrichtung (30) eine Messdatenübermittlungsvorrichtung (30) nach einem der Ansprüche 1 bis 11 ist.

14. Messdatenübermittlungsverfahren nach Anspruch 12 oder 13 **dadurch gekennzeichnet, dass** zwischen dem Auslesen und dem Empfangen von Messdaten als weitere aufeinanderfolgende Schritte vorgesehen sind:
- Empfangen und Verarbeiten eines vorbestimmten Messbefehls, insbesondere von einer Auswerteeinheit (40) oder von einem mittels der Kommunikationsvorrichtung (31) mit der Messdatenübermittlungsvorrichtung (30) verbundenen Fernauslöser,
- Anfordern von Messdaten von mindestens einem der Messwerkzeuge (20), insbesondere mindestens zwei der Messwerkzeuge (20), in Abhängigkeit des vorbestimmten Messbefehls.

15. Messwerkzeugsystem (70) umfassend eine Messdatenübermittlungsvorrichtung (30) nach einem der Ansprüche 1 bis 11 und mindestens zwei Messwerkzeuge (20), wobei die Messwerkzeuge (20) ausgebildet und eingerichtet sind, drahtlos mit der Messdatenübermittlungsvorrichtung (30) zu kommunizieren und Messdaten an die Messdatenübermittlungsvorrichtung (30) zu übermitteln, wobei insbesondere das Messwerkzeugsystem (70) eine Auswerteeinheit (40), insbesondere ein CAQ-System und/oder ein MES-System, aufweist.

## Claims

1. A measurement data transmission device (30) for transmitting measurement data of at least two measurement tools (20) to an evaluation unit (40), wherein the measurement data transmission device (30) has a communication device (31), wherein the communication device (31) is configured and designed to communicate wirelessly with the measurement tools (20) and to communicate with the evaluation unit (40) in a wired manner, in particular by means of USB, wherein the measurement data transmission device (30) is configured and designed to receive measurement data from at least one of the measurement tools (20) by means of the communication device (31) and to transmit received measurement data serially to the evaluation unit (40) by means of the communication device (31), **characterized in that**
the measurement data transmission device (30) has a mass storage (80) for storing configuration files (82), wherein the measurement data transmission device (30) is configured and designed to read out and to process at least one configuration file (82) stored in the mass storage (80) with communication settings stored therein, wherein the communication device (31) is configured and designed to receive measurement data from at least one of the measurement tools (20) according to the communication settings and/or to transmit received measurement data serially to the evaluation unit (40),
wherein the measurement data transmission device (30) has a temporary storage and the measurement data transmission device (30) is configured and designed to temporarily store received measurement data by means of the temporary storage.

2. The measurement data transmission device (30) according to Claim 1, **characterized in that** the communication device (31) is configured and designed to make the mass storage (80) available to the evaluation unit (40) as a connected removable data medium.

3. The measurement data transmission device (30) according to Claim 1 or 2, **characterized in that** the measurement data transmission device (30) is configured and designed to actuate at least one of the measurement tools (20) by means of the communication device (31) according to a predetermined control command, wherein in particular the predetermined control command is one control command from a plurality of predetermined control commands and/or the predetermined control command is predetermined by means of a communication setting in the at least one configuration file (82) stored in the mass storage (80).

4. The measurement data transmission device (30) according to Claim 3, **characterized in that** the predetermined control command
(a) is a resetting to zero of at least one of the measurement tools (20), and/or
(b) is a setting to a predetermined setting value of at least one of the measurement tools (20), and/or
(c) is an adjusting of a measurement unit and/or of a data format and/or of a measurement direction of at least one of the measurement tools (20), and/or
(d) is an adjusting of a measurement mode for at least one of the measurement tools (20).

5. The measurement data transmission device (30) according to any one of Claims 1 to 4, **characterized in that** the communication device (31) is configured and designed to receive and to process a predetermined measurement command, in particular from the evaluation unit (40), wherein the measurement data transmission device (30) is configured and designed to request measurement data from at least one of the measurement tools (20) as a function of the predetermined measurement command.

6. The measurement data transmission device (30) according to Claim 5,
**characterized in that** the predetermined measurement command is a measurement command from a plurality of predetermined measurement commands and/or comprises a measurement sequence which can be predetermined,
wherein in particular the measurement sequence which can be predetermined
(a) is a simultaneous requesting of measurement data from the measurement tools (20), and/or
(b) is a simultaneous requesting of measurement data from at least one of the measurement tools (20), and/or
(c) is a simultaneous requesting of measurement data from a group of measurement tools comprising at least one of the measurement tools, and/or
(d) is a sequence of requests for measurement data from at least one of the measurement tools (20) with a time interval between the requests, which is in particular predetermined by means of the measurement command, and/or
(e) is a sequence of requests for measurement data from at least one group of measurement tools comprising at least one of the measurement tools (20) with a time interval between the requests, which is in particular predetermined by means of the measurement command.

7. The measurement data transmission device (30) according to any one of Claims 1 to 6, **characterized in that** the communication device (31) is configured and designed to communicate with the measurement tools (20) by means of Bluetooth.

8. The measurement data transmission device (30) according to any one of Claims 1 to 7, **characterized in that** the measurement data transmission device (30) is configured and designed to group the measurement tools (20) in groups of measurement tools, wherein in particular the groups of measurement tools can be or are grouped by means of a communication setting in the at least one configuration file stored in the mass storage (80).

9. The measurement data transmission device (30) according to any one of Claims 1 to 8, **characterized in that** the communication device (31) is configured and designed to communicate with the evaluation unit (40) in a first device mode as an HID device or in a second device mode as a virtual COM port, wherein in particular the device mode can be or is selected by means of a communication setting in the at least one configuration file (82) stored in the mass storage (80).

10. The measurement data transmission device (30) according to any one of Claims 1 to 9, **characterized in that** the communication device (31) is configured and designed to transmit received measurement data to the evaluation unit (40) by means of at least one of the protocols USB-HID, BLE-HID, MUX10, MUX50, EUROMUX and DMX16, wherein in particular the protocol can be or is selected by means of a communication setting in the at least one configuration file (82) stored in the mass storage (80).

11. The measurement data transmission device (30) according to any one of Claims 1 to 10, **characterized in that** the measurement data transmission device (30) is configured and designed to transmit the measurement data to the evaluation unit (40) in each case with a unique measurement tool identification.

12. A measurement data transmission method for transmitting measurement data of at least two measurement tools (20) by means of a measurement data transmission device (30), wherein the measurement data transmission device (30) has a communication device (31) for communicating with the measurement tools (20) and with an evaluation unit (40), and has mass storage (80) for storing configuration files (82), wherein at least one, in particular editable, configuration file (82) with communication settings is stored in the mass storage (80), wherein the measurement data transmission method comprises the following successive steps:
- reading out the at least one configuration file (82) stored in the mass storage (80) and processing the communication settings stored in the at least one configuration file (82) by means of the measurement data transmission device (30),
- receiving measurement data from at least one of the measurement tools (20) by means of the communication device (31),
- serially transmitting the received measurement data to an evaluation unit (40) by means of the communication device (31),
wherein the receiving of measurement data and/or the serial transmitting is/are executed according to the communication settings,
wherein the measurement data transmission device (30) has temporary storage, wherein the measurement data transmission device (30) temporarily stores received measurement data by means of the temporary storage.

13. The measurement data transmission method according to Claim 12, **characterized in that** the measurement data transmission device (30) is a measurement data transmission device (30) according to any one of Claims 1 to 11.

14. The measurement data transmission method according to Claim 12 or 13, **characterized in that** the following are provided as further successive steps between the reading out and the receiving of measurement data:
- receiving and processing a predetermined measurement command, in particular from an evaluation unit (40) or from a remote trigger connected to the measurement data transmission device (30) by means of the communication device (31),
- requesting measurement data from at least one of the measurement tools (20), in particular at least two of the measurement tools (20), as a function of the predetermined measurement command.

15. A measurement tool system (70) comprising a measurement data transmission device (30) according to any one of Claims 1 to 11 and at least two measurement tools (20), wherein the measurement tools (20) are configured and designed to communicate wirelessly with the measurement data transmission device (30) and to transmit measurement data to the measurement data transmission device (30), wherein in particular the measurement tool system (70) has an evaluation unit (40), in particular a CAQ system and/or a MES system.

## Revendications

1. Dispositif (30) de transmission de données de mesure destiné à transmettre à une unité d'analyse (40) des données de mesure provenant d'au moins deux outils de mesure (20), le dispositif (30) de transmission de données de mesure comprenant un dispositif de communication (31), lequel dispositif de communication (31) est conçu et agencé pour communiquer sans fil avec les outils de mesure (20) par voie sans fil et pour communiquer avec l'unité d'analyse (40) par câble, notamment via USB, le dispositif (30) de transmission de données de mesure étant conçu et agencé pour, au moyen du dispositif de communication (31), recevoir des données de mesure provenant d'au moins un des outils de mesure (20) et transmettre les données de mesure reçues en série à l'unité d'analyse (40) au moyen du dispositif de communication (31), **caractérisé en ce que**
le dispositif (30) de transmission de données de mesure comprend une mémoire de masse (80) destinée à stocker des fichiers de configuration (82), le dispositif (30) de transmission de données de mesure étant conçu et agencé pour lire et traiter au moins un fichier de configuration (82) stocké dans la mémoire de masse (80) et contenant des paramètres de communication mémorisés,
le dispositif de communication (31) étant conçu et agencé pour, conformément aux paramètres de communication, recevoir des données de mesure provenant d'au moins un des outils de mesure (20), et/ou pour transmettre en série, à l'unité d'analyse (40), les données de mesure reçues, le dispositif (30) de transmission de données de mesure comprenant une mémoire tampon, et le dispositif (30) de transmission de données de mesure étant conçu et agencé pour mettre en mémoire tampon les données de mesure reçues au moyen de ladite mémoire tampon.

2. Dispositif (30) de transmission de données de mesure selon la revendication 1, **caractérisé en ce que** le dispositif de communication (31) est conçu et agencé de manière à rendre la mémoire de masse (80) disponible pour l'unité d'analyse (40) en tant que support de données amovible connecté.

3. Dispositif (30) de transmission de données de mesure selon la revendication 1 ou la revendication 2, **caractérisé en ce que** le dispositif (30) de transmission de données de mesure est conçu et agencé pour commander, au moyen du dispositif de communication (31), au moins un des outils de mesure (20) conformément à une instruction de commande prédéterminée, l'instruction de commande prédéterminée étant notamment une instruction de commande parmi une pluralité d'instructions de commande prédéterminées, et/ou l'instruction de commande étant prédéterminée au moyen d'un paramétrage de communication présent dans au moins un fichier de configuration (82) enregistré dans la mémoire de masse (80).

4. Dispositif (30) de transmission de données de mesure selon la revendication 3, **caractérisé en ce que** l'instruction de commande prédéterminée
(a) consiste à remettre à zéro au moins un des outils de mesure (20), et/ou
(b) consiste à régler au moins un des outils de mesure (20) sur une valeur de consigne prédéterminée, et/ou
(c) consiste en un réglage d'une unité de mesure, et/ou d'un format de données, et/ou d'une direction de mesure d'au moins un des outils de mesure (20), et/ou
(d) consiste en un réglage, en un réglage d'un mode de mesure pour au moins un des outils de mesure (20).

5. Dispositif (30) de transmission de données de mesure selon une des revendications 1 à 4, **caractérisé en ce que** le dispositif de communication (31) est conçu et agencé pour recevoir et traiter une instruction de mesure prédéterminée, en particulier provenant de l'unité d'analyse (40), le dispositif (30) de transmission de données de mesure étant conçu et agencé pour demander, en fonction de l'instruction de mesure prédéterminée, des données de mesure provenant d'au moins un des outils de mesure (20).

6. Dispositif (30) de transmission de données de mesure selon la revendication 5, **caractérisé en ce que** l'instruction de mesure prédéterminée est une instruction de mesure faisant partie d'une pluralité d'instructions de mesure prédéterminées, et/ou comprend une séquence de mesure apte à être prédéterminée,
la séquence de mesure apte à être prédéterminée consistant notamment
(a) en une demande simultanée de données de mesure auprès des outils de mesure (20), et/ou
(b) en une demande simultanée de données de mesure auprès d'au moins un des outils de mesure (20), et/ou
(c) en une demande simultanée de données de mesure auprès d'un groupe d'outils de mesure comprenant au moins un des outils de mesure, et/ou
(d) en une succession de demandes de données de mesure auprès d'au moins un des outils de mesure (20), avec, notamment au moyen de l'instruction de mesure, un intervalle de temps prédéterminé entre les demandes, et/ou
(e) en une succession de demandes de données de mesure auprès d'au moins un groupe d'outils de mesure comprenant au moins un des outils de mesure (20), avec, notamment au moyen de l'instruction de mesure, un intervalle de temps prédéterminé entre les demandes.

7. Dispositif (30) de transmission de données de mesure selon une des revendications 1 à 6, **caractérisé en ce que** le dispositif de communication (31) est conçu et agencé pour communiquer avec les outils de mesure (20) via Bluetooth.

8. Dispositif (30) de transmission de données de mesure selon une des revendications 1 à 7, **caractérisé en ce que** le dispositif (30) de transmission de données de mesure est conçu et agencé pour regrouper les outils de mesure (20) en groupes d'outils de mesure, les groupes d'outils de mesure étant notamment aptes à être regroupés, ou étant regroupés, au moyen d'un paramètre de communication figurant dans ledit au moins un fichier de configuration enregistré dans la mémoire de masse (80).

9. Dispositif (30) de transmission de données de mesure selon une des revendications 1 à 8, **caractérisé en ce que** le dispositif de communication (31) est conçu et agencé pour communiquer avec l'unité d'évaluation, soit dans un premier mode de fonctionnement en tant que périphérique HID, soit dans un deuxième mode de fonctionnement en tant que port COM virtuel (40), le mode de fonctionnement étant notamment apte à être sélectionné, ou étant sélectionné, au moyen d'un paramètre de communication figurant dans ledit au moins un fichier de configuration (82) stocké dans la mémoire de masse (80).

10. Dispositif (30) de transmission de données de mesure selon une des revendications 1 à 9, **caractérisé en ce que** le dispositif de communication (31) est conçu et agencé pour transmettre à l'unité d'analyse (40) les données de mesure reçues, en utilisant au moins un des protocoles USB-HID, BLE-HID, MUX10, MUX50, EUROMUX et DMX16, le protocole étant notamment apte à être sélectionné, ou étant sélectionné, au moyen d'un paramètre de communication figurant dans ledit au moins un fichier de configuration (82) stocké dans la mémoire de masse (80).

11. Dispositif (30) de transmission de données de mesure selon une des revendications 1 à 10, **caractérisé en ce que** le dispositif (30) de transmission de données de mesure est conçu et agencé pour transmettre les données de mesure à l'unité d'analyse (40) en y associant à chaque fois un identifiant unique d'outil de mesure.

12. Procédé de transmission de données de mesure destiné à transmettre les données de mesure d'au moins deux outils de mesure (20) au moyen d'un dispositif (30) de transmission de données de mesure, le dispositif (30) de transmission de données de mesure comprenant un dispositif de communication (31) destiné à communiquer avec les outils de mesure (20) et avec une unité d'analyse (40), ainsi qu'une mémoire de masse (80) destiné à stocker des fichiers de configuration (82), au moins un fichier de configuration (82), notamment modifiable, contenant des paramètres de communication étant stocké dans la mémoire de masse (80), le procédé de transmission de données de mesure comprenant les étapes successives suivantes :
- lecture dudit au moins un fichier de configuration (82) stocké dans la mémoire de masse (80) et traitement des paramètres de communication enregistrés dans ledit au moins un fichier de configuration (82) au moyen du dispositif (30) de transmission de données de mesure,
- réception de données de mesure provenant d'au moins un des outils de mesure (20) au moyen du dispositif de communication (31),
- transmission en série, au moyen du dispositif de communication (31), vers une unité d'analyse (40), des données de mesure reçues,
la réception des données de mesure, et/ou la transmission en série, étant effectuées conformément aux paramètres de communication,
le dispositif (30) de transmission de données de mesure comprenant une mémoire tampon, le dispositif (30) de transmission de données de mesure mettant en mémoire tampon les données de mesure reçues au moyen de ladite mémoire tampon.

13. Procédé de transmission de données de mesure selon la revendication 12, **caractérisé en ce que** le dispositif (30) de transmission de données de mesure est un dispositif (30) de transmission de données de mesure selon une des revendications 1 à 11.

14. Procédé de transmission de données de mesure selon la revendication 12 ou la revendication 13, **caractérisé en ce que**, entre la lecture et la réception de données de mesure, sont prévues en tant qu'étapes successives supplémentaires :
- réception et traitement d'une instruction de mesure prédéterminée, en particulier provenant d'une unité d'analyse (40) ou d'un déclencheur à distance relié au dispositif (30) de transmission de données de mesure par l'intermédiaire du dispositif de communication (31),
- demande de données de mesure auprès d'au moins un des outils de mesure (20), en particulier d'au moins deux des outils de mesure (20), en fonction de l'instruction de mesure prédéterminée.

15. Système d'outils de mesure (70) comprenant un dispositif (30) de transmission de données de mesure selon une des revendications 1 à 11 et au moins deux outils de mesure (20), les outils de mesure (20) étant conçus et agencés pour communiquer sans fil avec le dispositif (30) de transmission de données de mesure et pour transmettre des données de mesure au dispositif (30) de transmission de données de mesure, le système d'outils de mesure (70) comprenant notamment une unité d'analyse (40), en particulier un système CAQ, et/ou un système MES.
